**Europäisches Patentamt**

**European Patent Office**

**Office européen des brevets**

(11) Publication number: **0 147 818**
**B1**

# (12) EUROPEAN PATENT SPECIFICATION

(45) Date of publication of patent specification: **09.11.88**

(21) Application number: **84116044.3**

(22) Date of filing: **21.12.84**

(51) Int. Cl.⁴: **H 02 H 3/02**

(54) Electronic circuit for protection of productive systems coupled to a power supply.

(30) Priority: **21.12.83 IT 6832783**

(43) Date of publication of application:
**10.07.85 Bulletin 85/28**

(45) Publication of the grant of the patent:
**09.11.88 Bulletin 88/45**

(84) Designated Contracting States:
**AT CH DE FR GB LI NL SE**

(56) References cited:
**DE-A-2 147 471**
**US-A-3 544 720**
**US-A-3 571 659**
**US-A-3 668 470**

(73) Proprietor: **FASE S.p.A.**
**C. so Susa 9/11**
**Caselette (TO) (IT)**

(72) Inventor: **Bollito, Domenico**
**Via Pio VII**
**I-1050 Turin (IT)**

(74) Representative: **Riederer Freiherr von Paar zu**
**Schönau, Anton et al**
**Van der Werth, Lederer & Riederer Freyung 615**
**Postfach 2664**
**D-8300 Landshut (DE)**

Courier Press, Leamington Spa, England.

## Description

The invention relates to an electronic circuit for protection of an electric load coupled to a power supply.

In particular cases, it is desired that in case of malfunction such as a shortcircuit, any supply of the electric load is immediately stopped, preventing in advance serious anomalies to the system to which the load is appointed, and also to the operators.

Usually well-known circuit breakers take care of this task but, for many technical reasons, such devices are not capable to assure the immediate intervention in interrupting the power supply circuit. Therefore serious damages may occur to the system, and it also creates a passive and expensive interruption in the particular working process of the electric load, e.g. a machine coupled to the power supply because of the necessary restoration repairs to recouple the power supply. Besides there is poor safety against accidents for the surrounding operators with such prior art devices.

Also, an electronic circuit is known (DE—A—2 147 471) for shortcircuiting the electric load, which in particular is an electronic assembly of a television set. The load is power supplied via a thyristor circuit which in case of a shortcircuit in the load continues to supply current until the next zero crossing. To avoid damages, another thyristor in series with a capacitor is connected across the load and is triggered by a voltage drop tapped over a resistor in series with the load. Such arrangement, however, is not suitable for some conditions. Particularly, if there is a gap between or an overlapping of the conductive zones, detrementing operative conditions may occur. Further, a continued on-off-operation occurs in cases of a permanent short-circuit.

The purpose of this invention is to obviate the mentioned serious troubles by using electronic devices, each of them being known per se, but which turn out to be advantageously innovating as regards their operative assembling, with the result of their easy and fast realization and assembly, and with the increased efficiency and safety of intervention. The devices are to have a long lifetime. It is desired that this brings also an economical advantage, such as reduction in costs, starting from the manufacturer; therefore prices may becomme commercially competitive.

In order to achieve all these purposes and advantages and all the other ones which will be shown in the following detailed specification, the invention proposes an electronic circuit for protection as characterized in claim 1.

Its basic distinctive feature is the fact that the electronic switching components such as triacs are pushpull driven to cause their contemporaneous switching in case of various anomalities. This way they cause the interruption in the circuit of electric power supplied to the load and a short circuit over the load, assuring the safeguard of the system and also safety to the relative operators.

The serial coupling of the electronic switching components and the parallel coupling of one of them with the electric load, preferably in series with a fuse, provides for an immediate interruption of any voltage across the load, the first electronic switching component being switched on and off by the control signal and the second electronic switching component being switched on and off by the same but inverted control signal.

The following description which further presents the invention and provides for a deepened understanding thereof by explaining an embodiment thereof, is meant to be illustrative, supplied obviously for information and therefore is not restrictive. Reference is made to the drawings, in which:

— Fig. 1 is a schematic diagram of the circuit of protection and supply, realized according to the invention.

— Fig. 2a, 2b and 3 (which relate to an identical arrangement as in Fig. 1 as regards the installation of the components) show the same circuit but in different working phases.

Referring to the above mentioned Figures and restricting the detailed list of the parts to only those which are really innovating in their functionality, 1 indicates the electric feeding or supply line. On its upper branch 2 a well-known fuse 3 is set, which is provided with a state indicator 4. In the path of a vertically illustrated cable 5 connected between connection terminals of the supply, there is a first electronic switching component 6, i.e. a gate or call device, below which a second electronic switching component 7, i.e. a protection device is placed, components 6 and 7 being connected in series across the supply and having each a control input for receiving a control signal able to activate or block the switching component which thus has an on/off characteristic. The control input of switching component 6 is connected via a cable 8 to a control circuit 10, the control input of switching component 7 is connected to cable 8 via an inverter 9.

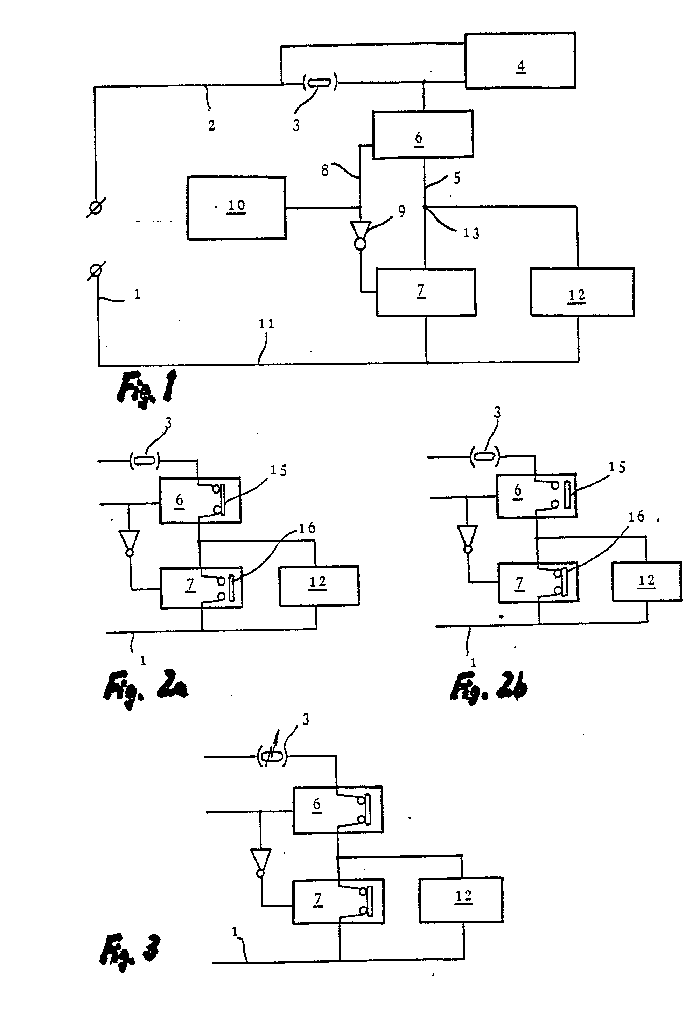

The lower branch 11 of the electric feeding line 1 is connected to an electric load 12 which is also coupled at a junction 13 to the above mentioned cable 5. Transistors of any kind and triacs can be used in the circuit, particularly as switching components 6 and 7. In the circuit arrangements according to Fig. 1 the components present an advantageous installation rationally utilizing the two active switching components which are functionally and conveniently coupled in opposition and in parallel to the line.

The first switching component 6 is set to control the power supplied to load 12, receiving an on or off signal fron control circuit 10. The second switching component 7, which is set in parallel with the load 12, is also controlled by control circuit 10, but the control signal is inverted, thus being an off or on signal.

A short circuit occurring due to any discrepancy causing the closing of one of the two aforesaid devices (such discrepancies originating from anomalous causes) will blow the fuse 3, so that the output is definitively stopped and consequently an operating machine activated by the electric load 12 is stopped. This way serious breakage is avoided and also maximum safety to the operators is assured.

In this case the closing of the protection device consisting of the second switching component 7 prevents any electric voltage from further reaching and activating load 12, since when both components 6 and 7 are closed load 12 is inactivated (see Fig. 3).

To operate the circuit, Fig. 2 shows the on/off operation which is illustrated as the connection of a couple of known switches 15/16, which are alternatively on and off, and the functional capabilities of the components of "call" 6 and "protection" 7, as well as load 12 either active in on condition (Fig. 2a), or inactive with reference to load 12 (Fig. 2b) corresponding to off condition.

Control circuit 10 takes care of the transitions of state of the above mentioned devices 6 and 7 and it does this extremely well, without any ambiguities, crossovers or various interferences during the transitions themselves.

Obviously this system can be realized in different ways, referring to its components, in order to improve even more its functionality without therefore being beyond the limits of this invention, as it is specified by the following claims.

## Claims

1. Electronic circuit for protection of an electric load (12) coupled to a power supply (1), comprising a first and a second electronic switching component (6, 7), each having a control input, serially coupled together across said power supply (1), the control input (8) of the first electronic switching component (6) being connected to a control circuit (10) for allowing or blocking current to flow through said first electronic switching component, and the second electronic switching component (7) being coupled in parallel with said electric load (12), characterized in that the signal applied to the control input of the second electronic switching component (7) is an inverted signal complementary to the signal applied to the control input of said first electronic switching component (6).

2. Electronic circuit according to claim 1, characterized in that said electronic switching components (6, 7) are triacs or transistors.

3. Electronic circuit according to claim 1 or 2, further characterized in that a fuse (3) is connected in series to the parallel arrangement of the electric load (12) and the second electronic switching component (7).

## Patentansprüche

1. Elektronische Schutzschaltung für eine elektrische Belastung (12), die mit einer Stromquelle (1) verbunden ist, mit einer ersten und einer zweiten elektronischen Schalterkomponente (6, 7), von denen jede einen Steuereingang aufweist und die miteinander in Reihe parallel zur Stromquelle (1) geschaltet sind, wobei der Steuereingang (8) der ersten elektronischen Schalterkomponente (6) mit einer Steuerschaltung (10) zum Durchlassen oder Sperren eines Stroms durch diese erste elektronische Schalterkomponente verbunden ist und die zweite elektronische Schalterkomponente (7) parallel zur elektrischen Belastung (12) geschaltet ist, dadurch gekennzeichnet, daß das an den Steuereingang der zweiten elektronischen Schalterkomponente (7) angelegte Signal ein invertiertes Signal ist, das komplementär zum an den Steuereingang der ersten elektronischen Schalterkomponente (6) angelegten Signal ist.

2. Elektronische Schaltung nach Anspruch 1, dadurch gekennzeichnet, daß die elektronischen Schalterkomponenten (6, 7) Triacs oder Transistoren sind.

3. Elektronische Schaltung nach Anspruch 1 oder 2, weiterhin dadurch gekennzeichnet, daß in Reihe mit der Parallelschaltung der elektrischen Belastung (12) und der zweiten elektronischen Schalterkomponente (7) eine Schmelzsicherung (3) geschaltet ist.

## Revendications

1. Circuit électronique de protection pour une charge électrique (12) branché à un réseau d'alimentation (1), comprenant un premier et un deuxième composant actif (6, 7), ayant chacun une borne de commande, connectés en série entr'eux par le réseau d'alimentation susdit (1), la borne de commande (8) du premier composant actif (6) étant connectée à un circuit de commande (10) pour permettre le passage, ou bien bloquer, le flux de courant à travers le premier composant actif susdit et étant le deuxième composant actif susdit connecté en parallèle avec la charge électrique susdite (12), caractérisé par le fait que la signal appliqué à la dite borne de commande du deuxième composant actif (7) est un signal inversé complémentaire au signal appliqué à la borne de commande du premier composant actif susdit.

2. Circuit électronique selon la revendication 1, caractérisé par le fait que les composants actifs susdits (6, 7) sont triacs ou transistors.

3. Circuit électronique selon la revendication 1 ou 2, caractérisé ultérieurement par le fait qu'un fusible (3) est connecté en série avec la disposition en parallèle de la charge électrique (12) et du deuxième composant actif (7).

Fig. 1

Fig. 2a

Fig. 2b

Fig. 3

0 147 818